(19) Europäisches Patentamt
European Patent Office
Office européen des brevets

(11) **EP 2 511 145 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**24.07.2019   Patentblatt 2019/30**

(45) Hinweis auf die Patenterteilung:
**10.08.2016   Patentblatt 2016/32**

(21) Anmeldenummer: **12002368.4**

(22) Anmeldetag: **30.03.2012**

(51) Int Cl.:
*B60T 7/10* (2006.01)   *B60T 7/12* (2006.01)
*B60T 7/14* (2006.01)   *B60T 8/172* (2006.01)
*B60T 13/22* (2006.01)   *B60T 13/68* (2006.01)
*B60T 13/74* (2006.01)   *B66F 9/075* (2006.01)
*B60T 8/1755* (2006.01)   *B60T 13/66* (2006.01)

(54) **Flurförderzeug mit einer Haltebremse sowie Verfahren zum Einstellen eines Haltemoments bei einem Flurförderzeug**

Industrial truck with a mechanical brake and method for adjusting a holding torque of an industrial truck

Chariot de manutention avec frein d'arrêt et procédé de réglage d'un moment d'arrêt du chariot de manutention

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2011   DE 102011016827**

(43) Veröffentlichungstag der Anmeldung:
**17.10.2012   Patentblatt 2012/42**

(73) Patentinhaber: **Jungheinrich Aktiengesellschaft**
**22047 Hamburg (DE)**

(72) Erfinder: **Aleyt, Christian**
**22301 Hamburg (DE)**

(74) Vertreter: **Hauck Patentanwaltspartnerschaft mbB**
**Postfach 11 31 53**
**20431 Hamburg (DE)**

(56) Entgegenhaltungen:
**EP-A1- 1 013 602        EP-A1- 1 264 759**
**EP-A1- 1 935 838        DE-A1- 3 311 643**
**DE-A1- 10 204 742       DE-A1- 19 752 022**
**DE-A1- 19 950 034       DE-A1-102007 001 708**
**DE-A1-102008 000 014    DE-A1-102009 031 742**
**DE-C1- 19 612 603       DE-C2- 4 139 443**
**DE-U1- 20 002 580       FR-A1- 2 132 322**
**GB-B- 2 454 270         US-A1- 2003 029 647**

EP 2 511 145 B2

**Beschreibung**

Die vorliegende Erfindung betrifft ein Flurförderzeug mit einer Haltebremse, einem Fahrsollwertgeber, der einen Sollwert für die Fahrgeschwindigkeit vorgibt, und einer Fahrsteuerung, die ansprechend auf den Sollwert für die Fahrgeschwindigkeit einen Antriebsmotor ansteuert. Ebenfalls betrifft die Erfindung ein Verfahren zum Einstellen eines Haltemoments bei einem Flurförderzeug, das mit einem Fahrantrieb und einer Bremse ausgestattet ist.

Ein derartiges Fahrzeug wird beispielsweise in der DE 197 52 022 A1 offenbart.

Elektrisch angetriebene Flurförderzeuge werden auch zum Be- und Entladen von Lastkraftwagen eingesetzt, wobei hierzu das Flurförderzeug auf einer Verladerampe an den Lkw heranfahren kann. Verladerampen können eine Neigung von bis zu 20 % besitzen. Um ein möglichst komfortables und sicheres Rangieren auf der Verladerampe zu gewährleisten, ist es wünschenswert, dass das Fahrzeug bei nicht betätigtem Fahrsollwertgeber aktiv an der Steigung hält.

Ein aktives Halten des Flurförderzeugs auf einer Laderampe kann durch den Einsatz einer Drehzahl- oder Momentenregelung für den Fahrantrieb sichergestellt werden. Aus energetischen und thermischen Gründen ist es jedoch nicht zweckmäßig einen aktiven Haltezustand über einen längeren Zeitraum aufrecht zu erhalten, da es hierdurch zu Überlastungen kommen kann, insbesondere wenn das Fahrzeug beladen ist.

Aus DE 197 52 022 A1 ist ein Flurförderzeug mit einem elektrischen Fahrantrieb und einer Feststellbremseinrichtung bekannt geworden. Die Feststellbremseinrichtung ist als Federspeicherbremse ausgebildet, die zum Lüften an die Förderleitung der hydraulischen Pumpe anschließbar ist, wobei die Federspeicherbremse beim Absteigen der Bedienperson und/oder bei unbetätigtem Fahrantrieb automatisch in die Bremsstellung beaufschlagbar ist.

Aus DE 10 2010 018 463 A1 ist ein Steuerverfahren für eine automatisiert betätigbare Feststellbremse bekannt geworden, bei dem ein Belegungssensor an einem Fahrerarbeitsplatzes erfasst, ob dieser nicht belegt ist und die Feststellbremse entsprechend betätigt wird. Hier wird aus einer erfassten Neigung eine nötige Haltekraft bestimmt, um die Feststellbremse nur soweit erforderlich bei dem Fahrzeug anzuziehen oder eine Anfahrhilfe zu verwirklichen, die die Feststellbremse in einer Steigerung erst löst, wenn das Antriebsmoment der Arbeitsmaschine groß genug ist, um ein Zurückrollen des Fahrzeugs zu verhindern.

Der Erfindung liegt die Aufgabe zugrunde, ein Flurförderzeug sowie ein Verfahren zum Einstellen eines Haltemoments für ein solches zur Verfügung zu stellen, das mit einfachen Mitteln ein Stehen des Fahrzeugs auf einer Rampe erlaubt, ohne dass es zur Überhitzung oder Überlastung des Fahrantriebs oder der Steuerung kommt.

Erfindungsgemäß wird die Aufgabe durch ein Flurförderzeug mit den Merkmalen aus Anspruch 1 gelöst. Ebenfalls wird die Aufgabe durch ein Verfahren mit den Verfahrensschritten gemäß Anspruch 10 gelöst. Vorteilhafte Ausgestaltungen bilden den Gegenstand der Unteransprüche.

Das erfindungsgemäße Flurförderzeug ist mit einer Haltebremse, einem Fahrsollwertgeber und einer Fahrsteuerung ausgestattet. Der Fahrsollwertgeber erzeugt einen Sollwert für die Fahrgeschwindigkeit. Die Fahrsteuerung steuert einen Fahrantrieb entsprechend dem vorgegebenen Sollwert an. Erfindungsgemäß ist die Fahrsteuerung derart ausgebildet, dass bei nicht betätigtem Fahrsollwertgeber ein Haltemoment für den Fahrantrieb eingeregelt wird, das das Fahrzeug bei einem geneigten oder schrägem Untergrund auch gegen eine Hangabtriebskraft im Stillstand hält. Das eingeregelte Haltemoment für den Fahrantrieb stellt sicher, dass das Fahrzeug sich im Stillstand hält. Ferner ist die Fahrsteuerung ausgebildet, um eine Haltebremse zu betätigen und den Fahrantrieb bei betätigter Haltebremse zu deaktivieren. Auf diese Weise wird das erfindungsgemäße Flurförderzeug durch die Fahrsteuerung aktiv im Stillstand gehalten, bis eine Haltebremse das notwendige Haltemoment aufbringt und der Fahrantrieb bei betätigter Haltebremse deaktiviert wird. Erfindungsgemäß ist ferner vorgesehen, um eine ruckartige Bewegung des Fahrzeugs beim Wiederanfahren zu vermeiden, dass die Fahrsteuerung bei erneuter Betätigung des Fahrsollwertgebers den Fahrantrieb zur Erzeugung des Haltemoments wieder ansteuert und die Haltebremse löst. Die erfindungsgemäße Fahrsteuerung vermeidet also eine ruckartige Bewegung des Flurförderzeugs, in dem vor einem Lösen der Haltebremse wieder das eingeregelte Haltemoment an den Fahrantrieb angelegt und ausgehend von diesem Haltemoment dann eine weitere Steuerung der Fahrgeschwindigkeit gemäß dem Fahrsollwertgeber erfolgt. Die Haltebremse wird von der erfindungsgemäßen Fahrsteuerung erst dann wieder gelöst, wenn das beim Stehenbleiben des Fahrzeugs eingeregelte Haltemoment an dem Fahrantrieb anliegt. Die erfindungsgemäße Fahrsteuerung vermeidet ein Überhitzen des Fahrantriebs, da bei dem stehenden Flurförderzeug kein aktives Halten über den Fahrantrieb erfolgt, sondern die Haltebremse diese Funktion übernimmt.

Erfindungsgemäß speichert die Fahrsteuerung die Steuergrößen zur Erzeugung eines eingeregelten Haltemoments ab und erzeugt ausgehend von den Steuergrößen wieder das Haltemoment, wenn der Fahrsollwertgeber erneut betätigt wird. Bevorzugt sind je nach Art der Ansteuerung des Fahrantriebs als Steuergrößen ein Wert des Drehmoments und/oder ein Wert für den momentenbildenden Strom vorgesehen. Durch die Reaktivierung der gespeicherten Steuergrößen für das eingeregelte Haltemoment kann die Fahrsteuerung sicherstellen, dass bei einem erneuten Losfahren durch Betätigung des Fahrsollwertgebers, das an dem Fahrantrieb vorliegende Haltemoment bereits ausreichend groß ist, um das Fahrzeug ausgehend vom Stillstand zu bewegen. Es erfolgt bei erneuter Betätigung des Fahrsollwertgebers also nicht ein erneutes Einregeln eines Haltemoments von einem beliebigen Startwert für das Haltemoment, sondern die Fahrsteuerung mit der Regelung des Fahrantriebs beginnt bei dem bereits eingeregelten Wert für das Haltemoment.

In einer bevorzugten Weiterbildung der Erfindung ist vorgesehen, dass die Fahrsteuerung die Haltebremse aktiviert, wenn über eine vorbestimmte Zeitdauer der Sollwertgeber nicht betätigt wurde. Es erfolgt also bei kurzen Stillstandszeiten des Flurförderzeugs eine aktive Regelung des Stillstands. Erst wenn die vorbestimmte Zeitdauer verstrichen ist, speichert die Fahrsteuerung die Werte zur Erzeugung des eingeregelten Haltemoments und betätigt die Haltebremse.

In einer bevorzugten Ausgestaltung ist das erfindungsgemäße Flurförderzeug mit einem Lastsensor ausgestattet, der eine Veränderung der Last während der betätigten Haltebremse erfasst. Hierzu wird die Last bei eingeregeltem Haltemoment und bei Wiederbetätigung des Fahrsollwertgebers erfasst. Die Fahrsteuerung korrigiert die gespeicherten Steuergrößen zu dem eingeregelten Haltemoment bei einer Veränderung der Last. Einer solchen Korrektur liegt die Überlegung zugrunde, dass ein Flurförderzeug, das im Stillstand beladen wird, bei Lösen der Haltebremse ein größeres aktiv erzeugtes Haltemoment benötigt, als das für das nicht beladene Flurförderzeug eingeregelte Haltemoment. Ebenso ist das erforderliche Haltemoment geringer, wenn das eingeregelte Haltemoment sich auf das beladene Flurförderzeug bezieht und dieses bei erneuter Betätigung des Fahrsollwertgebers vollständig oder teilweise entladen ist. Hier werden bevorzugt die gespeicherten Steuergrößen zur Erzeugung des Haltemoments derart korrigiert, dass das Haltemoment größer wird, wenn die Last sich während des Stillstands erhöht hat und dass das Haltemoment verkleinert wird, wenn die Last sich bei dem stillstehenden Fahrzeug vermindert hat. Die Korrektur der gespeicherten Steuergrößen zur Erzeugung des Haltemoments erfolgt bevorzugt durch einen Lastkorrekturfaktor, der sich aus der geänderten Last berechnet und der multiplikativ auf die Steuergrößen angewendet wird.

Die erfindungsgemäße Fahrsteuerung erfasst Situationen, in denen sich ein Lenkwinkel an dem Flurförderzeug während der Stillstandsphase verändert hat. Dies ist für Flurförderzeuge mit einem lenkbaren Fahrantrieb vorgesehen. Bei der Erfindung erfasst eine Lenksensorik eine Lenkbewegung, während die Haltebremse betätigt ist. Die Fahrsteuerung korrigiert dann die gespeicherten Steuergrößen entsprechend der Veränderung des Lenkwinkels. Hier wird bevorzugt ein Lenkwinkelkorrekturfaktor verwendet, der sich aus dem geänderten Lenkwinkel bestimmt und der mit den gespeicherten Steuergrößen zur Erzeugung des Haltemoments multipliziert wird.

Neben der vorstehenden Korrektur aufgrund einer Veränderung des Lenkwinkels kann in einer weiteren bevorzugten Ausgestaltung auch die Lage des Lenkwinkels relativ zu einem Steigungswinkel berücksichtigt werden. Diese Weiterbildung ist insbesondere für Flurförderzeuge relevant, die mit einem Neigungssensor ausgestattet sind, der eine Neigung des Untergrunds erfassen kann. Die Lenksteuerung bestimmt einen Lenksteigungskorrekturfaktor, ausgehend aus einem Relativwinkel zwischen Wirkrichtung des lenkbaren Fahrantriebs und der Steigungsrichtung. Die Fahrsteuerung korrigiert die gespeicherten Steuergrößen entsprechend dem Relativwinkel bei eingeregeltem Haltemoment und bei Lösen der Haltebremse. Anders als bei dem Lenkkorrekturfaktor, bei dem lediglich eine Änderung des Lenkwinkels erfasst werden musste, muss zur Bestimmung des Lenksteigungskorrektorfaktors auf einen Relativwinkel bei eingeregeltem Haltemoment und einen Relativwinkel bei Lösen der Haltebremse abgestellt werden.

Die erfindungsgemäße Aufgabe wird ebenfalls durch ein Verfahren mit den Merkmalen aus Anspruch 11 gelöst.

Das Verfahren dient zum Einstellen eines Haltemoments bei einem Flurförderzeug, das einen Fahrantrieb und eine Haltebremse aufweist. Erfindungsgemäß erfolgt ein Einregeln des Haltemoments an dem Fahrantrieb derart, dass bei einem nicht betätigten Fahrsollwertgeber das Fahrzeug bei einem geneigten oder schrägen Untergrund im Stillstand gehalten wird. Ebenso erfolgt ein Betätigen der Haltebremse und ein Deaktivieren des Fahrantriebs. Wenn der Fahrsollwertgeber erneut betätigt wird, erfolgt ein Anlegen des eingeregelten Haltemoments an den Fahrantrieb und ein Lösen der Haltebremse. Das erfindungsgemäße Verfahren stellt sicher, dass bei Lösen der Haltebremse dem Fahrantrieb des Flurförderzeugs direkt wieder das eingeregelte Haltemoment anliegt, so dass nahezu ruckfrei der von dem Fahrsollwertgeber vorgegebene Sollwert von dem Fahrantrieb umgesetzt werden kann, ohne dass das Fahrzeug an einer Steigung in Bewegung gerät.

Erfindungsgemäß werden nach Einregeln des Haltemoments Steuergrößen zur Erzeugung des Haltemoments gespeichert und bei erneuter Betätigung des Fahrsollwertgebers Steuergrößen ausgehend von den gespeicherten Steuergrößen an die Fahrsteuerung angelegt. Um ein Aktivieren der Haltebremse bei kurzfristigen Haltevorgängen zu vermeiden, ist in einer bevorzugten Ausgestaltung des Verfahrens vorgesehen, bei nicht betätigtem Sollwertgeber die Betätigung der Haltebremse und die Deaktivierung des Fahrantriebs erst nach einer vorbestimmten Zeitspanne vorzunehmen. Auf diese Weise wird sichergestellt, dass lediglich kurzfristige Haltevorgänge aktiv eingeregelt werden und nur bei längeren Haltevorgängen die Haltebremse betätigt wird.

In einer bevorzugten Weiterbildung des erfindungsgemäßen Verfahrens wird eine Änderung einer aufgenommenen Last erfasst, während der Fahrsollwertgeber nicht betätigt wird. Der Wert des bei einer erneuten Betätigung des Fahrsollwertgebers anzulegenden Haltemoments wird erhöht, wenn die aufgenommene Last sich vergrößert hat. Ebenso wird der Wert des anzulegenden Haltemoments bei einer erneuten Betätigung des Fahrsollwertgebers vermindert, wenn sich die von dem Flurförderzeug aufgenommene Last reduziert hat.

Das erfindungsgemäße Verfahren sieht für Flurförderzeuge mit einem lenkbaren Fahrantrieb vor, eine Lenkbewegung, während der Fahrsollwertgeber nicht betätigt und die Haltebremse aktiviert ist, zu erfassen und den Wert des Haltemoments bei erneuter Betätigung des Fahrsollwertgebers, abhängig von dem Änderungswinkel für die Lenkbewegung, zu korrigieren. In diesem Verfahren wird entsprechend einer Änderung des Lenkwinkels das gespeicherte Haltemoment entsprechend korrigiert.

Eine weitere bevorzugte Ausgestaltung des erfindungsgemäßen Verfahrens kommt bei einem Flurförderzeug mit einem lenkbaren Fahrantrieb zum Einsatz, das zudem einen Neigungssensor besitzt, der eine Neigung des Untergrunds erfassen kann. In dieser Weiterbildung des Verfahrens erfolgt das Bestimmen eines Relativwinkels zwischen einer Steigung und einer Wirkrichtung des lenkbaren Fahrantriebs. Es wird der Relativwinkel bei eingeregeltem Haltemoment und bei Lösen der Haltebremse erfasst. Der Wert des anzulegenden Haltemoments bei erneuter Betätigung des Fahrsollwertgebers wird abhängig von den beiden Werten des Relativwinkels erfasst, wobei ein erster Relativwinkel bei eingeregeltem Haltemoment und ein zweiter Relativwinkel bei erneuter Betätigung des Fahrtwertgebers erfasst wird.

Die Erfindung wird nachfolgend anhand eines Ausführungsbeispiels näher erläutert. Es zeigt:

Fig. 1 ein Flussdiagramm, das das Verfahren zum Reaktivieren eines Haltemoments an einem Flurförderzeug schrittweise beschreibt,

Fig. 2 eine perspektivische Ansicht eines Flurförderzeugs und

Fig. 3 eine schematische Ansicht des Lenkwinkels.

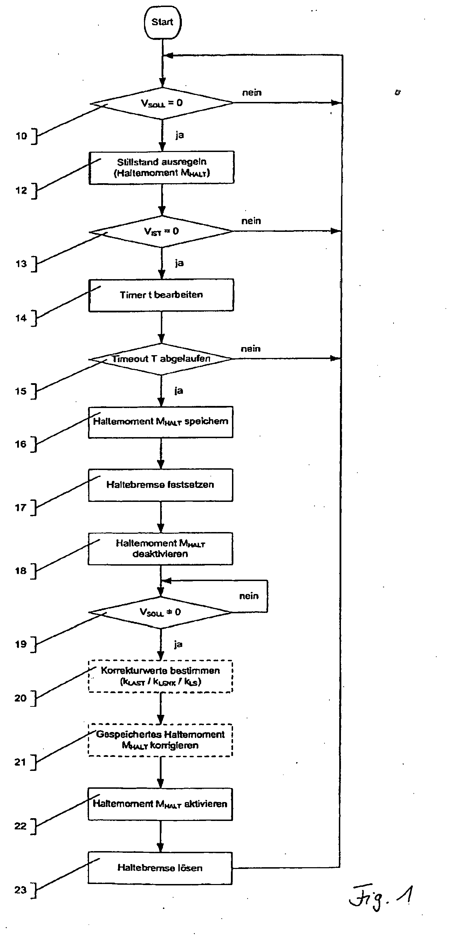

Das erfindungsgemäße Verfahren geht gemäß Fig. 1 von einem Verfahrensschritt 10 aus, in dem der Fahrsollwertgeber nicht betätigt ist. In der schematischen Darstellung bedeutet dies, dass der vorgegebene Sollwert für die Fahrgeschwindigkeit 0 beträgt ($v_{soll} = 0$).

In einem nachfolgenden Schritt 12 regelt die Fahrsteuerung ein aktives Haltemoment $M_{halt}$ derart ein, dass das Fahrzeug steht ($v_{ist} = 0$). Liegt dieser Fall vor (Abfrage 13), so wird in einem nachfolgenden Schritt 14 ein Zähler t gestartet.

Mit einer Abfrage 15 wird anhand des gestarteten Zählers t geprüft, ob eine vorbestimmte Zeitdauer T bereits überschritten wurde. Ist die Zeitdauer T nicht überschritten, kehrt das Verfahren zur aktiven Regelung in Schritt 12 zurück. Ist die Zeitdauer T überschritten, so wird das aktuell anliegende Haltemoment $M_{halt}$ gespeichert (Schritt 16), eine Haltebremse an dem Flurförderzeug aktiviert (Schritt 17) und das durch die Fahrsteuerung generierte Haltemoment $M_{halt}$ deaktiviert (Schritt 18).

In der nachfolgenden Abfrage 19 wird überprüft, ob weiterhin der Fahrsollwertgeber nicht betätigt ist. Für den Fall, dass der Fahrsollwertgeber betätigt ist ($v_{soll} \neq 0$), wird in einem nachfolgenden Schritt 22 das in Schritt 16 gespeicherte Haltemoment $M_{halt}$ wieder an den Fahrantrieb angelegt. Bei angelegtem Haltemoment $M_{halt}$ wird nachfolgend in Schritt 23 die Haltebremse gelöst. Das Fahrzeug ist nun wieder betriebsbereit, um entsprechend den Vorgaben des Fahrsollwertgebers zu fahren und den Fahrantrieb entsprechend anzusteuern.

Wird in Abfrage 19 festgestellt, dass weiterhin der Fahrsollwertgeber nicht betätigt wurde, dann verharrt das Verfahren im Zustand inaktiver Fahrsteuerung und betätigter Haltebremse.

Das in Schritt 12 ermittelte Haltemoment $M_{halt}$ wird bei dem erfindungsgemäßen Verfahren gespeichert, damit der Wert des Haltemoments in Schritt 22 wieder reaktiviert werden kann.

Sollte sich zwischen der Speicherung des eingeregelten Haltemoments $M_{halt}$ in Schritt 16 und dem Reaktivieren des eingeregelten Haltemoments $M_{halt}$ in Schritt 22 das Gesamtgewicht des Fahrzeugs verändert haben, so wird bei Fahrzeugen mit einer Lastsensorik die Laständerung erfasst und in Schritt 20 ein Lastkorrekturfaktor $k_{last}$ bestimmt. Dieser Korrekturfaktor wird anschließend in Schritt 21 auf das in Schritt 16 gespeicherte Haltemoment $M_{halt}$ angewendet, um ein korrigiertes Haltemoment für die Reaktivierung der Fahrzeugsteuerung in Schritt 22 zu bestimmen. Ein möglicher Lastkorrekturwert kann beispielsweise lauten:

$$k_{last} = \frac{m_{Fzg} + m_{neu}}{m_{Fzg} + m_{alt}},$$

wobei $m_{Fzg}$ eine bekannte Fahrzeugleermasse bezeichnet, $m_{alt}$ die Last bei Ausregeln des Haltemoments und $m_{neu}$ die Last zum Zeitpunkt der Antriebsreaktivierung.

Alternativ zu dem vorstehenden Lastkorrekturfaktor kann auch auf eine Laständerung $\Delta m = m_{alt} - m_{neu}$ bei der Bestimmung des Lastkorrekturfaktors abgestellt werden.

Falls keine Lasterfassung für die Korrektur des Haltemoments zur Verfügung steht oder die Korrektur ungenau ist, führt eine Lasterhöhung zwar zu einer Fahrzeugbewegung hangabwärts, jedoch fällt diese deutlich geringer aus als ohne die Aktivierung des gespeicherten Haltemoments, da nur die durch die zusätzliche Last aufgenommene Differenz eingeregelt werden muss. Eine Verringerung der Last führt bei geringen Sollwertvorgaben für die Fahrgeschwindigkeit gegebenenfalls zu einer Beschleunigung über die Sollwertvorgabe hinaus. Eine solche überschießende Fahrgeschwindigkeit kann bei einem Flurförderzeug früh detektiert und eingeregelt werden, so dass ein nahezu ruckfreier Übergang in den Fahrbetrieb erfolgt.

Das erfindungsgemäße Verfahren tritt speziell bei lenkbaren Fahrantrieben auf. Durch Lenkbewegungen zwischen dem Zeitpunkt, in dem das Haltemoment gespeichert wurde (Schritt 16), und dem Zeitpunkt, in dem das gespeicherte Haltemoment reaktiviert werden soll (Schritt 22), kann sich bei einer Lenkbewegung die Wirkrichtung des Antriebsmotors ändern und stimmt so nicht mehr mit der Richtung des durch die Hangabtriebskraft an dem Flurförderzeug verursachten Lastmoments überein. Die Folgen dieser fehlenden Übereinstimmung können an zwei Extremfällen veranschaulicht werden:

- Das Flurförderzeug habe an einer Steigungsstrecke derart angehalten, dass die Hangabtriebskraft entlang der Fahrzeuglängsachse in Richtung Heck wirkt. Durch Drehung des Antriebs um 90° steht das Antriebsrad senkrecht zum Gefälle und das reaktivierte Haltemoment würde nicht mehr der Hangabtriebskraft entgegenwirken, sondern zu einer ungewollten seitlichen Bewegung des Fahrzeugs auf der Steigungsstrecke führen.

- Das Flurförderzeug habe an einer Steigungsstrecke derart angehalten, dass die Hangabtriebskraft entlang der Fahrzeugachse in Richtung Heck wirkt. Durch Drehung des Fahrantriebs um 180° ist die Ausrichtung der Antriebsachse zum Gefälle zwar identisch mit der Ausrichtung beim Einregeln des Haltemoments, jedoch hat sich das Vorzeichen geändert und die Reaktivierung des ursprünglichen Haltemoments würde beim Anfahren fälschlicherweise das Fahrzeug hangabwärts beschleunigt, anstelle das Fahrzeug an der Steigung aktiv zu halten.

Diese Effekte werden verhindert, indem die Änderung des Lenkwinkels $\Delta\alpha$ zwischen Speicherung des Haltemoments (Schritt 16) und Reaktivierung des Haltemoments (Schritt 22) ein Korrekturfaktor $k_{lenk}$ gemäß $k_{lenk} = \cos(\Delta\alpha)$ bestimmt wird. Der so bestimmte Faktor bewirkt, dass das in Schritt 21 korrigierte Haltemoment betragsmäßig immer kleiner oder gleich dem gespeicherten Haltemoment ist. Für die beschriebenen Fälle ergeben sich folgende Korrekturfaktoren:

$$k_{lenk} = \cos(\pm 90°) = 0$$

und

$$k_{lenk} = \cos(\pm 180°) = -1.$$

Diese Fälle bewirken für das quer gestellte Antriebsrad ($\Delta\alpha = \pm 90°$), dass der korrigierte Werte des Haltemoments 0 beträgt und eine Seitwärtsfahrt des Fahrzeugs vermieden wird. Auch der andere Fall mit $\Delta a$

$= \pm 180°$ bewirkt eine Umkehr des Haltemoments, so dass das erzeugte Haltemoment in die richtige Richtung wirkt.

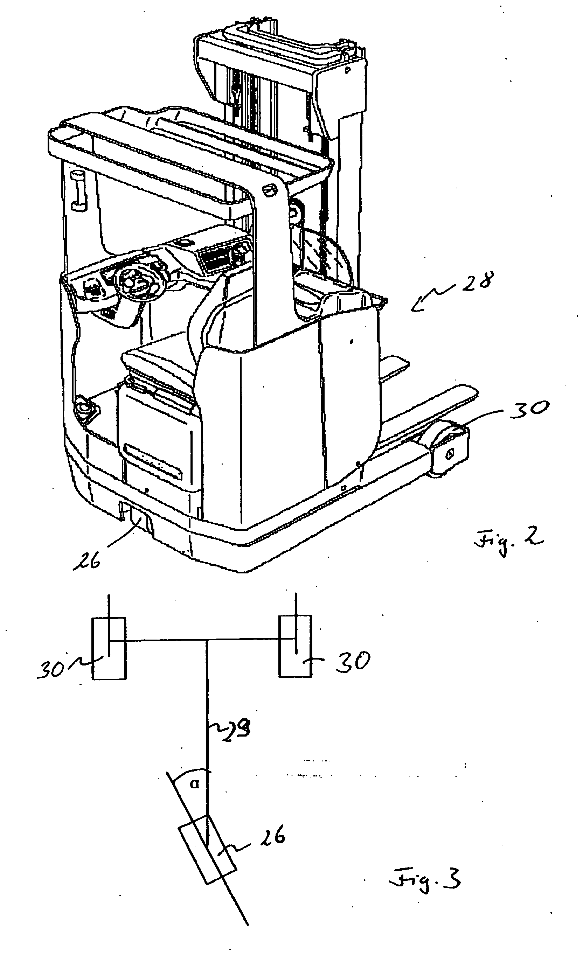

Fig. 3 zeig ein gelenktes Antriebsrad 26 an einem Flurförderzeug 28 (Fig. 2), das einen Winkel $\alpha$ zu einer Mittellängsachse 29 einschließt. Abgestützt wird das Fahrzeug durch ein Paar Lasträder 30, die in Richtung der Mittellängsachse 29 ausgerichtet sind.

In einer weiteren Fortbildung des Verfahrens verfügt das Flurförderzeug über einen Neigungssensor, der ermittelt, in welchem Winkel die Steigung befahren wurde und in welchem Winkel sich das Antriebsrad dazu befindet. Hierbei kann der Fall berücksichtigt werden, dass das Antriebsrad im Stillstand zwischen den Schritten 16 und 22 aus einer schräg zur Steigung stehenden Position in die Steigung hinein oder aus dieser heraus gedreht wird, wodurch sich das benötigte Haltemoment bei Korrektur betragsmäßig vergrößert und verkleinert. Ein möglicher Lenksteigungskorrekturfaktor $k_{LS}$ beträgt beispielsweise:

$$k_{LS} = \frac{\cos(\alpha_{neu})}{\cos(\alpha_{alt})},$$

wobei $\alpha_{neu}$ den Relativwinkel zwischen der Wirkrichtung des Antriebsrads und der Steigungsrichtung bei Wiederbetätigung des Fahrsollwertgebers und $\alpha_{alt}$ den entsprechenden Relativwinkel bei der Einregelung des Haltemoments bezeichnet.

Bei der vorsehenden Formel muss der Fall von $\cos(\alpha_{alt})$ ungefähr $= 0$ gesondert betrachtet werden. In diesem Fall kann aufgrund einer Näherung der gewünschte Korrekturfaktor $k_{LS}$ durch Behebung der Polstelle bestimmt werden.

**Patentansprüche**

1. Flurförderzeug mit einer Haltebremse, einem Fahrsollwertgeber, der einen Sollwert für die Fahrgeschwindigkeit erzeugt, und einer Fahrsteuerung, die an sprechend auf den Sollwert für die Fahrgeschwindigkeit einen Fahrantrieb ansteuert, **dadurch gekennzeichnet, dass**

- die Fahrsteuerung bei nicht betätigtem Fahrsollwertgeber ein Haltemoment für den Fahrantrieb einregelt, das das Flurförderzeug bei einem geneigten Untergrund im Stillstand hält, die Steuergrößen zur Erzeugung des eingeregelten Haltemoments speichert, die Haltebremse betätigt und den Fahrantrieb bei betätigter Haltebremse deaktiviert, und

- dass die Fahrsteuerung bei erneuter Betätigung des-Fahrsollwertgebers den Fahrantrieb zur Erzeugung des Haltemoments, ausgehend von den gespeicherten Steuergrößen, wieder ansteuert und die Haltebremse löst,
- wobei ein lenkbarer Fahrantrieb vorgesehen ist und eine Lenksensorik eine Lenkbewegung während betätigter Haltebremse erfasst, wobei die Fahrsteuerung die gespeicherten Steuergrößen entsprechend der Veränderung des Lenkwinkels korrigiert.

2. Flurförderzeug nach Anspruch 1, **dadurch gekennzeichnet, dass** die Fahrsteuerung als Steuergröße einen Wert des Drehmoments und/oder einen Wert für den momentbildenden Strom für das eingeregelte Haltemoment speichert.

3. Flurförderzeug nach Anspruch 1 oder 2, **dadurch gekennzeichnet, dass** die Fahrsteuerung die Haltebremse aktiviert, wenn für eine vorbestimmte Zeitdauer der Fahrsollwertgeber nicht betätigt wurde.

4. Flurförderzeug nach einem der Ansprüche 1 bis 3, **dadurch gekennzeichnet, dass** ein Lastsensor eine Veränderung der Last während betätigter Haltebremse erfasst und die Fahrsteuerung die gespeicherten Steuergrößen entsprechend einer aufgenommenen Last bei Einregeln des Haltemoments und bei Wiederbetätigung des Fahrsollwertgebers korrigiert.

5. Flurförderzeug nach Anspruch 4, **dadurch gekennzeichnet, dass** die gespeicherten Steuergrößen zur Erzeugung des Haltemoments derart korrigiert werden, dass das Haltemoment vergrößert wird, wenn die Last erhöht, und das Haltemoment verkleinert wird, wenn die Last verringert wurde.

6. Flurförderzeug nach Anspruch 5, **dadurch gekennzeichnet, dass** die Fahrsteuerung einen Lastkorrekturfaktor aus der geänderten Last bestimmt, der mit den gespeicherten Steuergrößen zur Erzeugung des Haltemoments multipliziert wird.

7. Flurförderzeug nach Anspruch 1, **dadurch gekennzeichnet, dass** die Fahrsteuerung einen Lenkwinkelkorrekturfaktor aus dem geänderten Lenkwinkel bestimmt, der mit den gespeicherten Steuergrößen zur Erzeugung des Haltemoments multipliziert wird.

8. Flurförderzeug nach einem der Ansprüche 1 bis 7, **dadurch gekennzeichnet, dass** ein Neigungssensor vorgesehen ist, der eine Neigung des Untergrunds erfasst und die Lenksteuerung einen Relativwinkel zwischen Wirkrichtung des lenkbaren Fahrantriebs und Steigungsrichtung bei eingeregeltem Haltemoment und bei Lösen der Haltebremse bestimmt, wobei die Fahrsteuerung die gespeicherten Steuergrößen entsprechend den bestimmten Relativwinkeln korrigiert.

9. Flurförderzeug nach Anspruch 89, **dadurch gekennzeichnet, dass** die Lenksteuerung einen Lenksteigungskorrekturfaktor aus den Relativwinkeln bei eingeregeltem Haltemoment und bei Lösen der Haltebremse bestimmt, der mit den gespeicherten Steuergrößen zur Erzeugung des Haltemoments multipliziert wird.

10. Verfahren zum Einstellen eines Haltemoment bei einem Flurförderzeug, das einen lenkbaren Fahrantrieb und eine Haltebremse aufweist, mit folgenden Verfahrensschritten:

- Einregeln eines Haltemoments an dem Fahrantrieb derart, dass bei einem nicht betätigten Fahrsollwertgeber das Flurförderzeug bei einem geneigten Untergrund im Stillstand gehalten wird,
- Speichern von Steuergrößen zur Erzeugung des eingeregelten Haltemoments,
- Betätigen der Haltebremse und Deaktivieren des Fahrantriebs,
- Anlegen des eingeregelten Haltemoments an den Fahrantrieb, ausgehend von den gespeicherten Steuergrößen und Lösen der Haltebremse, wenn der Fahrsollwertgeber erneut betätigt wird und
- Erfassen einer Änderung des Lenkwinkels während der Fahrsollwertgeber nicht betätigt wird und Korrigieren des Werts des anzulegenden Haltemoments abhängig von einer Änderung des Lenkwinkels.

11. Verfahren nach Anspruch 10, **dadurch gekennzeichnet, dass** bei nichtbetätigtem Fahrsollwertgeber die Betätigung der Haltebremse und Deaktivierung des Fahrantriebs nach einer vorbestimmten Zeitspanne erfolgt.

12. Verfahren nach einem der Ansprüche 10 oder 11, **gekennzeichnet durch** Erfassen einer Änderung einer aufgenommenen Last während der Fahrsollwertgeber nicht betätigt wird und Erhöhen des Wertes des anzulegenden Haltemoments, wenn die aufgenommene Last sich erhöht hat, und Vermindern des Wertes des anzulegenden Haltemoments, wenn die aufgenommene Last sich vermindert hat.

13. Verfahren nach einem der Ansprüche 10 bis 12 für ein Flurförderzeug mit einem lenkbaren Fahrantrieb und einem Neigungssensor, **gekennzeichnet durch**

- Bestimmen eines Relativwinkels zwischen Steigung und Wirkrichtung des lenkbaren Fahrantriebs,
- Erfassen eines Relativwinkels bei eingeregeltem Haltemoment und bei Lösen der Haltebremse und
- Korrigieren des Wertes des anzulegenden Haltemoments abhängig von den beiden Werten des Relativwinkels.

## Claims

1. An industrial truck with a holding brake, a travel speed setting unit that generates a desired value for the travel speed, and a travel control device, which controls a travelling drive in response to the desired value for the travel speed, **characterised in that**

   • when the travel speed setting unit is not turned on, the travel control device regulates a holding torque for the travelling drive, which keeps the industrial truck in standstill on inclined ground, memorises the control parameters for the generation of the regulated holding torque, actuates the holding brake and deactivates the travelling drive at actuated holding brake, and
   • when the travel speed setting unit is actuated anew, the travel control device turns on the travelling drive again to generate the holding torque based on the memorised control parameters, and releases the holding brake.
   • and a steerable travelling drive is provided and steering sensors detect a steering movement when the holding brake is actuated, wherein the travel control device corrects the memorised control parameters according to the change of the steering angle.

2. The industrial truck according to claim 1, **characterised in that** as a control parameter, the travel control device memorises a value of the torque and/or a value for the torque-generating current for the regulated holding torque.

3. An industrial truck according to claim 1 or 2, **characterised in that** the travel control device activates the holding brake when the travel speed setting unit has not been actuated for a predetermined period.

4. An industrial truck according to any one of the claims 1 to 3, **characterised in that** a load sensor detects a change of the load at actuated holding brake, and the travel control device corrects the memorised control parameters according to a lifted load when it regulates the holding torque and upon re-actuation of the travel speed setting unit.

5. The industrial truck according to claim 4, **characterised in that** the memorised control parameters for the generation of the holding torque are corrected such that the holding torque is increased when the load is increased, and the holding torque is diminished when the load has been diminished.

6. The industrial truck according to claim 5, **characterised in that** the travel control device determines a load correction factor from the changed load, which is multiplied by the memorised control parameters for the generation of the holding moment.

7. The industrial truck according to claim 1, **characterised in that** the travel control device determines a correction factor of the steering angle from the changed steering angle, which is multiplied by the memorised control parameters for the generation of the holding torque.

8. An industrial truck according to any one of the claims 1 to 7, **characterised in that** an inclination sensor is provided which detects an inclination of the ground, and that the steering control device determines a relative angle between the effective direction of the steerable travelling drive and the slope direction upon regulated holding torque and upon release of the holding brake, wherein the travel control device corrects the memorised control parameters according to the determined relative angles.

9. The industrial truck according to claim 8, **characterised in that** the steering control device determines a steering slope control correction factor from the relative angles at regulated holding torque and when the holding brake is being released, which is multiplied by the memorised control parameters for the generation of the holding torque.

10. A method for adjusting a holding torque in an industrial truck, which has a steerable travelling drive and a holding brake, comprising the following procedural steps:

    • regulating a holding torque on the travelling drive such that the industrial truck is maintained in the stand still condition on inclined ground when the travel speed setting unit is not turned on,
    • memorising control parameters for the generation of the regulated holding torque,
    • actuating the holding brake and deactivating the travelling drive,
    • applying the regulated holding torque to the travelling drive based on the memorised control parameters, and releasing the holding brake when the travel speed setting unit is actuated again and
    • detecting a change of the steering angle when the travel speed setting unit is not turned on, and correcting of the value of the holding torque to be applied as a function of a change of the steering angle.

**11.** The method according to claim 10, **characterised in that** the activation of the holding brake and the deactivation of the travelling drive takes place after a predetermined period of time when the travel speed setting unit is not turned on.

**12.** A method according to one of the claims 10 or 11, **characterised by** the detection of a change of the lifted load when the travel speed setting unit is not turned on, and by increasing the value of the holding torque to be applied when the lifted load has increased, and diminishing the value of the holding torque to be applied when the lifted load has diminished.

**13.** A method according to any one of the claims 10 to 12 for an industrial truck having a steerable travelling drive and an inclination sensor, **characterised by**

  • determining a relative angle between slope and effective direction of the steerable travelling drive,
  • detecting a relative angle at regulated holding torque and upon release of the holding brake, and
  • correcting the value of the holding torque to be applied depending on the two values of the relative angle.

**Revendications**

**1.** Chariot de manutention avec un frein d'arrêt, un émetteur de valeur de consigne de déplacement générant une valeur de consigne pour la vitesse de déplacement, et une commande de déplacement actionnant un mécanisme de déplacement en fonction de la valeur de consigne pour la vitesse de déplacement,
**caractérisé en ce que**

  - la commande de déplacement règle un couple d'arrêt pour le mécanisme de déplacement lorsque l'émetteur de valeur de consigne de déplacement n'est pas activé, lequel maintient le chariot de manutention à l'état en position stationnaire lorsque le sol est penché, enregistre les grandeurs de commande pour la génération du couple d'arrêt réglé, active le frein d'arrêt et désactive le mécanisme de déplacement lorsque le frein d'arrêt est activé, et
  - **en ce que** la commande de déplacement actionne de nouveau le mécanisme de déplacement pour générer le couple d'arrêt et relâche le frein d'arrêt, à partir des grandeurs de commande enregistrées, lors d'une nouvelle activation de l'émetteur de valeur de consigne de déplacement,

  - dans lequel il est prévu un mécanisme de déplacement dirigeable et un système de détection de direction détecte un mouvement de direction pendant que le frein d'arrêt est activé, la commande de déplacement corrigeant les grandeurs de commande enregistrées en fonction de la modification de l'angle de direction.

**2.** Chariot de manutention selon la revendication 1, **caractérisé en ce qu'**en tant que grandeur de commande, la commande de déplacement enregistre une valeur du couple de rotation et/ou une valeur pour le courant formant le couple pour le couple d'arrêt réglé.

**3.** Chariot de manutention selon la revendication 1 ou 2, **caractérisé en ce que** la commande de déplacement active le frein d'arrêt lorsque l'émetteur de valeur de consigne de déplacement n'a pas été activé pendant une durée prédéterminée.

**4.** Chariot de manutention selon l'une des revendications 1 à 3, **caractérisé en ce qu'**un capteur de charge détecte une modification de la charge pendant que le frein d'arrêt est activé, et la commande de déplacement corrige les grandeurs de commande enregistrées en fonction d'une charge reçue lors du réglage du couple d'arrêt et lors d'une nouvelle activation de l'émetteur de valeur de consigne de déplacement.

**5.** Chariot de manutention selon la revendication 4, **caractérisé en ce que** les grandeurs de commande enregistrées sont corrigées de telle façon pour la génération du couple d'arrêt, que le couple d'arrêt est agrandi lorsque la charge est augmentée et le couple d'arrêt est diminué lorsque la charge est réduite.

**6.** Chariot de manutention selon la revendication 5, **caractérisé en ce que** la commande de déplacement détermine un facteur de correction de charge à partir de la charge modifiée, lequel est multiplié par les grandeurs de commande enregistrées pour la génération du couple d'arrêt.

**7.** Chariot de manutention selon la revendication 1, **caractérisé en ce que** la commande de déplacement détermine un facteur de correction d'angle de direction à partir de l'angle de direction modifié, lequel est multiplié par les grandeurs de commande enregistrées pour la génération du couple d'arrêt.

**8.** Chariot de manutention selon l'une des revendications 1 à 7, **caractérisé en ce qu'**il est prévu un capteur d'inclinaison détectant l'inclinaison du sol, et la commande de direction détermine un angle relatif entre la direction d'action du mécanisme de déplacement dirigeable et la direction d'inclinaison lorsque le couple d'arrêt est réglé et lors du relâchement du frein d'arrêt, la commande de déplacement corrigeant les grandeurs de commande enregistrées en fonction des angles relatifs déterminés.

9. Chariot de manutention selon la revendication 8, **caractérisé en ce que** la commande de direction détermine un facteur de correction de pente de direction à partir des angles relatifs lorsque le couple d'arrêt est réglé et lors du relâchement du frein d'arrêt, lequel est multiplié par les grandeurs de commande enregistrées pour la génération du couple d'arrêt.

10. Procédé pour le réglage d'un couple d'arrêt dans un chariot de manutention présentant un mécanisme de déplacement dirigeable et un frein d'arrêt, comprenant les étapes suivantes :

   - réglage d'un couple d'arrêt sur le mécanisme de déplacement, de telle façon que lorsque l'émetteur de valeur de consigne de déplacement n'est pas activé, le chariot de manutention est maintenu dans une position stationnaire lorsque le sol est penché,
   - enregistrement de grandeurs de commande pour la génération du couple d'arrêt réglé,
   - activation du frein d'arrêt et désactivation du mécanisme de déplacement,
   - application du couple d'arrêt réglé sur le mécanisme de déplacement à partir des grandeurs de commande enregistrées et relâchement du frein d'arrêt lorsque l'émetteur de valeur de consigne de déplacement est de nouveau activé, et
   - détection d'une modification de l'angle de direction pendant que l'émetteur de valeur de consigne de déplacement n'est pas activé, et correction de la valeur du couple d'arrêt à appliquer en fonction d'une modification de l'angle de direction.

11. Procédé selon la revendication 10, **caractérisé en ce que** lorsque l'émetteur de valeur de consigne de déplacement n'est pas activé, l'activation du frein d'arrêt et la désactivation du mécanisme de déplacement ont lieu après un laps de temps prédéterminé.

12. Procédé selon l'une des revendications 10 ou 11, **caractérisé par** la détection d'une modification d'une charge reçue pendant que l'émetteur de valeur de consigne de déplacement n'est pas activé et par l'augmentation de la valeur du couple d'arrêt à appliquer lorsque la charge reçue a augmenté, et par la diminution de la valeur du couple d'arrêt à appliquer lorsque la charge reçue a diminué.

13. Procédé selon l'une des revendications 10 à 12 pour un chariot de manutention avec un mécanisme de déplacement dirigeable et un capteur d'inclinaison, **caractérisé par**

   - la détermination d'un angle relatif entre la pente et la direction d'action du mécanisme de déplacement dirigeable,
   - la détection d'un angle relatif lorsque le couple d'arrêt est réglé et lors du relâchement du frein d'arrêt, et
   - la correction de la valeur du couple d'arrêt à appliquer en fonction des deux valeurs de l'angle relatif.

```
                          ┌───────┐
                          │ Start │
                          └───┬───┘
                              │◄──────────────────────────────────┐
                              ▼                                    │
                         ╱─────────╲          nein                 │
              10    ◄───╱ V_SOLL = 0 ╲──────────────────►          │
                        ╲           ╱                              │
                         ╲─────────╱                               │
                              │ ja                                 │
                              ▼                                    │
                    ┌─────────────────────┐                       │
              12    │ Stillstand ausregeln │                       │
                    │ (Haltemoment M_HALT) │                       │
                    └──────────┬──────────┘                       │
                              ▼                                    │
                         ╱─────────╲          nein                 │
              13    ◄───╱ V_IST = 0  ╲──────────────────►          │
                        ╲           ╱                              │
                         ╲─────────╱                               │
                              │ ja                                 │
                              ▼                                    │
                    ┌─────────────────────┐                       │
              14    │  Timer t bearbeiten  │                       │
                    └──────────┬──────────┘                       │
                              ▼                                    │
                         ╱─────────────────╲    nein               │
              15    ◄───╱ Timeout T abgelaufen ╲─────────►         │
                        ╲                     ╱                     │
                         ╲───────────────────╱                     │
                              │ ja                                 │
                              ▼                                    │
                    ┌─────────────────────────┐                   │
              16    │ Haltemoment M_HALT speichern │               │
                    └──────────┬──────────────┘                   │
                              ▼                                    │
                    ┌─────────────────────┐                       │
              17    │ Haltebremse festsetzen │                     │
                    └──────────┬──────────┘                       │
                              ▼                                    │
                    ┌─────────────────────┐                       │
              18    │ Haltemoment M_HALT    │                      │
                    │ deaktivieren          │                      │
                    └──────────┬──────────┘                       │
                              ▼◄───────────────┐                  │
                         ╱─────────╲     nein   │                  │
              19    ◄───╱ V_SOLL ≠ 0 ╲──────────┘                  │
                        ╲           ╱                              │
                         ╲─────────╱                               │
                              │ ja                                 │
                              ▼                                    │
                    ┌─────────────────────────┐                   │
              20    │ Korrekturwerte bestimmen │                   │
                    │ (k_LAST / k_LENK / k_LS)  │                  │
                    └──────────┬──────────────┘                   │
                              ▼                                    │
                    ┌─────────────────────────┐                   │
              21    │ Gespeichertes Haltemoment │                  │
                    │ M_HALT korrigieren        │                  │
                    └──────────┬──────────────┘                   │
                              ▼                                    │
                    ┌─────────────────────────┐                   │
              22    │ Haltemoment M_HALT aktivieren │               │
                    └──────────┬──────────────┘                   │
                              ▼                                    │
                    ┌─────────────────────┐                       │
              23    │  Haltebremse lösen   │───────────────────────┘
                    └─────────────────────┘
```

$Fig. 1$

Fig. 2

Fig. 3

**EP 2 511 145 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19752022 A1

- DE 102010018463 A1